# EUROPEAN PATENT SPECIFICATION

(11) **EP 3 636 068 B1**
(45) Date of publication and mention of the grant of the patent: **02.06.2021**
(21) Application number: 19201871.1
(22) Date of filing: 08.10.2019
(51) Int. Cl.: A01G 9/24, A01G 9/28

(54) **CULTIVATION SYSTEM CAPABLE OF CONTROLLING THE LOCAL CULTIVATION ENVIRONMENT**
ZUR STEUERUNG DER LOKALEN KULTIVIERUNGSUMGEBUNG FÄHIGES KULTIVIERUNGSSYSTEM
SYSTÈME DE CULTURE POUVANT RÉGULER L'ENVIRONNEMENT DE CULTURE LOCAL

(30) Priority: 08.10.2018 KR 20180119794
(43) Date of publication of application: 15.04.2020
(73) Proprietor: Korea Institute of Energy Research, Daejeon 34129 (KR)
(72) Inventor: IM, Yonghoon, 34129 Daejeon (KR); YOON, Siwon, Sejong-si, 30127 (KR)
(74) Representative: Stöckeler, Ferdinand

(56) References cited:
- CN-U- 207 531 499
- JP-A- 2005 034 043
- JP-A- 2011 217 729
- JP-A- 2016 154 473
- JP-A- 2018 110 547
- KR-B1- 101 718 682
- KR-B1- 101 729 170
- US-A1- 2016 157 447

## Description

### [Technical Field]

The present disclosure relates to a cultivation system capable of controlling a local cultivation environment, and more particularly, to a cultivation system capable of controlling a local cultivation environment, which may locally control various conditions or environments necessary for growth of the crop such as control of humidity or CO₂ fertilizer as well as effectively controlling the temperature of a small area where the crop is planted and grown, thereby improving convenience and productivity of the cultivation of the crop, reducing production costs, and improving quality of the crop.

### [Background Art]

Generally, the cultivation of crop in the bare ground is done in the certain season, the demand of fresh crop continues actually all the year round due to high standard of living, and recently, the uncertainty for supply and demand of the domestic crop and the price fluctuation increases due to frequent occurrence of the abnormal climate.

Accordingly, as a method of reducing uncertainty due to the abnormal climate, and meeting the year-round demand of consumers, a facility horticulture industry gradually expands and various research and development is under way.

For example, facility horticulture performs a cultivation process while planting crop on plantation configured in a horticultural facility such as a glass greenhouse or a vinyl greenhouse, and managing the environment to maintain the conditions such as temperature, humidity, and CO₂, which are ideal for cultivating the crop.

Further, the facility horticulture is a device for cultivating the crop at a position higher than a ground surface considering workability, efficiency of cultivation, and reduction in a labor cost, and cultivates the crop by using a facility commonly referred to as an elevated cultivation device.

The elevated cultivation device has a disadvantage in that the temperature of the soil may not be kept constant because the internal heat of a bed or a cultivation vessel in which the crop is planted is easily released as it is exposed to the air spaced by a certain height apart from the ground surface.

As a method of compensating for this disadvantage, Korean Patent Laid-Open Publication No. 10-0828734 proposes an elevated cultivation device using a planar heating sheet.

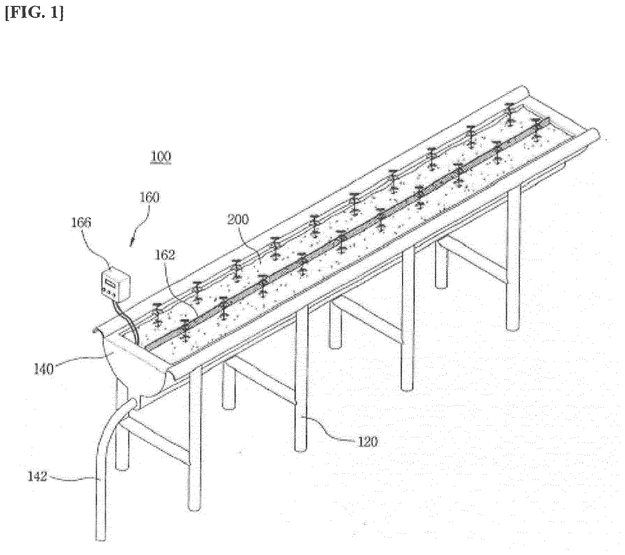

The elevated cultivation device using the planar heating sheet is configured to include a support 120, a cultivation vessel 140, and a heating mechanism 160 composed of the planar heating sheet as illustrated in FIG. 1. The support 120 is a structure that is placed at a certain height from the ground surface to support the cultivation vessel 140 and is configured as the height at which a worker may stand and easily handle the cultivated crop.

The above-described conventional elevated cultivation device has an advantage in that the temperature may be adjusted by the heating mechanism, but has various problems as follows.

First, the conventional elevated cultivation device may increase the internal temperature of the cultivation vessel 140 where the root portion of the crop is planted, but may not increase the temperature in a space where the leaf and stem portions are positioned, such that there is a limitation in that the crop may be damaged by frost and may not perform photosynthesis properly in the low-temperature environment such as winter, thereby not expecting adequate growth.

In order to solve this problem, a method of increasing the temperature around the crop by installing an auxiliary heating device around the elevated cultivation device may be proposed, but has a disadvantage in that since the warm air supplied from the auxiliary heating device moves up rapidly without staying around the crop by the convective process, it is very difficult to maintain the temperature around the crop for a certain time or more and the energy cost is excessively high.

Further, the conventional elevated cultivation device may perform a temperature control function to some extent, but there is a limitation that may not control the various cultivation environments, such as a control of humidity or CO₂ fertilizer, which is essential for the cultivation of crop. In particular, there is a disadvantage in that since the conventional elevated cultivation device may not be locally implemented only around the crop even if it has a facility for the control of humidity or the CO₂ fertilizer, it is necessary to control the humidity or perform CO₂ fertilizer as a whole in the internal space of the horticulture facility.

Accordingly, the conventional horticulture facility has a limitation in that since the internal cultivation environment may not be locally managed properly, the production cost increases due to the increase in maintenance costs, energy costs, and the like, the yield of crop grown is lowered, and the production cost increases and the quality of the crop is lowered because the management by the worker should be performed.

### [Related Arts]

### [Patent Documents]

[Patent Document 1] Korean Utility Model Registration No. 20-0129738 "AERIAL RAISING SEEDLING DEVICE OF CROP"
[Patent Document 2] Korean Patent No. 10-0828734 "ELEVATED CULTIVATION DEVICE USING PLANAR HEATING SHEET"
[Patent Document 3] Korean Patent No. 10-1585806 "STRAWBERRY ELEVATED CULTIVATION DEVICE"

JP 2005 034043 A teaches a plant for cultivating soil culture plants that is designed to cultivate plants in a greenhouse formed of transparent material such as PVC; wherein the plant is provided with a cultivation bed 3 for planting plants; an air blower 9 sucking outer air into the greenhouse 1 through a filter 11; an air conditioner 8 heating or cooling the air sucked via the air blower 9; a wind guide pipe 4 supplying the outer air sucked through the air blower 9 to a place in adjacent to leaves of the plant on the cultivation bed 3 as air blow; and an exhausting part 2.

KR 101 718 682 B1 teaches an air conditioning and heating system for the rooting zone of the plant which is configured as a hanging gutter structure comprising: a cultivation main body (100); a cold/hot water circulation pipe (300) installed to circulate cold water and hot water to the cultivation main body (100); and an heat insulating and reflective sheet (500) which surrounds the cultivation main body (100) and the cold/hot water circulation pipe (300) in a downward direction, for the same to be located inside the heat insulating and reflective sheet (500).

JP 2018 110547 A teaches a growth-supporting apparatus 100 for locally cooling or wanning plants P put on a medium, which has a plurality of water pipes 101 inside which flows liquid at lower temperature or higher temperature than the ambient temperature, and a long duct 105 into which air is blown with a blowing device; wherein the duct 105 is disposed on a medium 12 so that its bottom comes into contact with the medium 12, and the plurality of water pipes 101 are disposed at intervals in the duct 105.

KR 101 729 170 B1 teaches a circulation blower type heating/cooling system for a greenhouse, the system comprises: a heat pump device cooling or heating circulation water to store the cooled or heated circulation water; a heating/cooling pipe through which the cooled or heated water supplied from the storage tank is circulated while being installed in the inner surface part of the wall of a greenhouse to surround the inside of the greenhouse, so as to first cool or heat the inside of the greenhouse; a blowing unit having a blowing duct fixated and installed in the outer part of the bottom surface inside the greenhouse, wherein multiple blowing pipes vertically erected at constant intervals are installed in the blowing duct while communicating with each other, and have multiple air discharge holes perforated on the wall of the greenhouse at constant vertical intervals by a height corresponding to the wall of the greenhouse; and a circulation chamber unit connected to the inside of the greenhouse through a suction pipe while being disposed in the outside of the greenhouse, and connected to the blowing duct through a supply pipe.

US 2016/157447 A1 teaches a plant cultivation apparatus that includes a cultivation unit including a cultivation bed that includes a recess having a recessed cross-sectional shape and receiving cultivation liquid injected into the recess, and a cultivation plate provided on the cultivation bed; the cultivation plate is supported by the recess of the cultivation bed, and includes an air supply path formed inside the cultivation plate, an air intake port through which air is supplied to the air supply path, and an air discharge port connecting with the air supply path and formed on an upper surface side of the cultivation plate where a cultivation plant is disposed.

JP 2011 217729 A teaches an apparatus for temperature control in a greenhouse, which includes a nutrient solution tank 2 and a cultivation shelf 3, the tank 2 is configured so that a gap 8 is formed between the cultivation shelf 3 and nutrient solution 20; a blower 90 is provided so that air having flown through the gap 8 along a liquid surface of the nutrient solution 20 circulates through a communication passage 10.

JP 2016 1544373 A teaches a cultivation tank for hydroponics that comprises a cultivation tank body 1 having a liquid reservoir part 1a which stores culture solution 50, and a cultivation shelf 2 holding plants 8. The cultivation tank body 1 is in a hollow multilayer wall structure equipped with at least an inner wall 10 and an outer wall 11, the multilayer wall structure is partitioned by at least one partition part 3 and a plurality of hollow parts 4 are formed.

CN 207 531 499 U teaches a walnut cuttage bed comprising a bed body, a temperature control device and a humidification device, the temperature control device includes an air compressor, a dehumidifier and an air heater, the air compressor, the dehumidifier and the air heater lead to air through tube in proper order and connect, an air heater's outlet is equipped with the outlet duct, the outlet duct extends to in the soil horizon through the tube hole, the humidification device includes water tank and atomizer, and the entrance point and the water tank of atomizer are connected, and the exit end of atomizer is connected with air heater's exit end.

### [Disclosure]

### [Technical Problem]

The present disclosure is intended to solve the problems, and an object of the present disclosure is to provide a cultivation system capable of controlling a local cultivation environment, which may effectively perform the temperature control of the small area where the crop is planted and grown, thereby improving the viability of the crop and the quality of the crop and reducing the production cost through the reduction in the energy cost.

Another object of the present disclosure is to provide a cultivation system capable of controlling a local cultivation environment, which may locally control various conditions or environments necessary for the growth of the crop such as a control of humidity or CO₂ fertilizer as well as a control of temperature in a small area where the crop is planted and grown, thereby improving convenience and productivity of the cultivation of the crop, reducing the production cost, and improving the quality of the crop.

### [Technical Solution]

For achieving the objects, a cultivation system capable of controlling a local cultivation environment according to claim 1 is provided.

Further, for achieving the objects, the cultivation system capable of controlling a local cultivation environment according to the present disclosure may include, in the cultivation system capable of controlling the local cultivation environment, a bed where a crop is planted, a heat exchange medium part disposed close to the bed, a plurality of air circulation pipes installed along the longitudinal direction of the bed to face the heat exchange medium part, an air suction means connected to suck air into the air circulation pipe, and an air induction member disposed to be communicated with the air circulation pipe, and having an outflow hole provided in an induction body formed to surround the heat exchange medium part.

Meanwhile, for achieving the objects, the cultivation system capable of controlling a local cultivation environment according to the present disclosure may include, in the cultivation system capable of controlling the local cultivation environment, a bed where a crop is planted, a heat exchange medium part disposed close to the bed, a plurality of air circulation pipes installed along the longitudinal direction of the bed to face the heat exchange medium part, an air suction means connected to suck air into the air circulation pipe, an air induction member disposed to be communicated with the air circulation pipe, and having an outflow hole provided in an induction body formed to surround the heat exchange medium part, and a utility supply pipe connected to be communicated with the air induction member, and configured to supply at least one of the air containing dry air, cold air, warm air, moisture, and CO₂ for creating the cultivation environment of the crop.

Preferably, the air circulation pipe may have a plurality of flowing holes formed in a circulation pipe body having a hollow part.

The cultivation system capable of controlling the local cultivation environment according to the present disclosure may further include a horizontal air circulation pipe connected horizontally between the air circulation pipes and having the plurality of flowing holes formed therein, and the air circulation pipe may have the plurality of flowing holes formed in the circulation pipe body having the hollow part.

Further, the cultivation system capable of controlling the local cultivation environment according to the present disclosure may further include a transparent cover body installed between the air circulation pipes so as to cover the upper portion of the bed and formed so that an accommodating space of the crop is prepared therein.

Meanwhile, for achieving the objects, a cultivation system capable of controlling a local cultivation environment according to the present disclosure may include, in the cultivation system capable of controlling the local cultivation environment, a bed where a crop is planted, a heat exchange medium part disposed close to the bed, a plurality of air circulation holes formed along the longitudinal direction of the bed to face the heat exchange medium part, and an air suction means connected to suck air into the air circulation hole.

Here, the bed may be formed with a foreign material inflow prevention projection so as to block foreign material from flowing into the air circulation hole.

Meanwhile, the heat exchange medium part may be composed of a water pipe disposed under the bed and in which warm water or cold water flows, the air suction means may be composed of a suction fan configured to suck air, and the bed may be configured to include a bed frame on which soil or medium is placed, and a bed support member connected to support the bed frame.

### [Advantageous Effects]

By the cultivation system capable of controlling the local cultivation environment according to the present disclosure, it is possible to move the warm air which tries to diffuse toward the direction of the ceiling of the greenhouse downwards into the bed by the operation of the air circulation pipe and the air suction means to effectively perform the temperature rise and the temperature control of the root zone in the upper portion of the bed, thereby improving the viability of the crop and the quality of the crop and reducing the production cost by reducing the energy cost.

Further, the cultivation system capable of controlling the local cultivation environment according to the present disclosure may locally control various conditions or environments necessary for the growth of the crop such as a control of humidity or CO₂ fertilizer as well as the control of temperature of the small area where the crop is grown by using the air circulation pipe, the air suction means, the air induction member, and the utility supply pipe, thereby improving the convenience and productivity of the cultivation of the crop, reducing the production cost, and improving the quality of the crop.

### [Description of Drawings]

FIG. 1 is a diagram for explaining a conventional elevated cultivation device.
FIG. 2 is a perspective diagram for explaining a cultivation system capable of controlling a local cultivation environment according to a first embodiment of the present disclosure.
FIG. 3 is a schematic diagram for explaining an operation of the cultivation system capable of controlling the local cultivation environment according to the first embodiment of the present disclosure.
FIG. 4 is a perspective diagram for explaining a cultivation system capable of controlling a local cultivation environment according to a second embodiment of the present disclosure.
FIG. 5 is a schematic diagram for explaining an operation of the cultivation system capable of controlling the local cultivation environment according to the second embodiment of the present disclosure.
FIG. 6 is a perspective diagram for explaining a cultivation system capable of controlling a local cultivation environment according to a third embodiment of the present disclosure.
FIG. 7 is a schematic diagram for explaining an operation of the cultivation system capable of controlling the local cultivation environment according to the third embodiment of the present disclosure.
FIG. 8 is a perspective diagram for explaining a cultivation system capable of controlling a local cultivation environment according to a fourth embodiment of the present disclosure.
FIG. 9 is a schematic diagram for explaining an operation of the cultivation system capable of controlling the local cultivation environment according to the fourth embodiment of the present disclosure.
FIG. 10 is a perspective diagram for explaining a first modification example of the cultivation system capable of controlling the local cultivation environment according to the fourth embodiment of the present disclosure.
FIG. 11 is a perspective diagram for explaining a second modification example of the cultivation system capable of controlling the local cultivation environment according to the fourth embodiment of the present disclosure.
FIG. 12 is a perspective diagram for explaining a cultivation system capable of controlling a local cultivation environment according to a fifth embodiment of the present disclosure.
FIG. 13 is a schematic diagram for explaining an operation of the cultivation system capable of controlling the local cultivation environment according to the fifth embodiment of the present disclosure.

### [Best Mode]

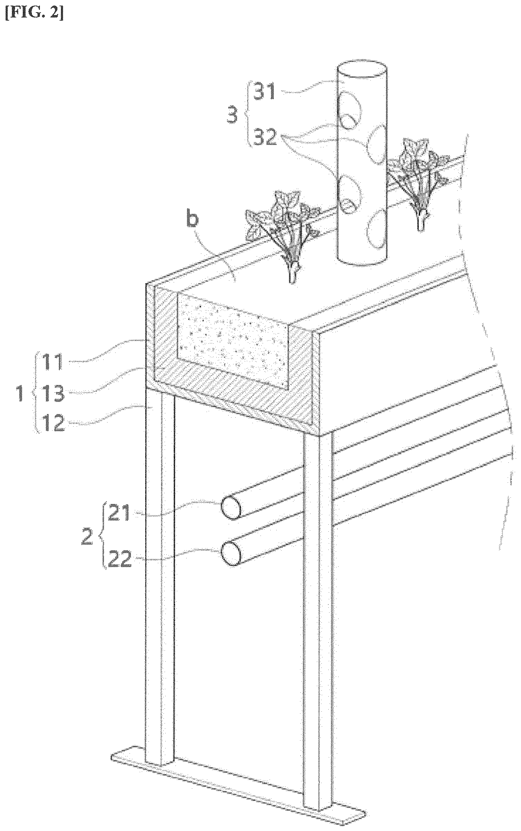

Hereinafter, preferred embodiments of the present disclosure will be described in detail with reference to FIGS. 2 to 13, and the same elements are denoted by the same reference numerals in FIGS. 2 to 13. Meanwhile, the illustration and detailed description of configurations, and operations and effects thereof that may be easily understood by those skilled in the art from general technology in each drawing have been briefly made or omitted, and have been illustrated by focusing on parts related to the present disclosure.

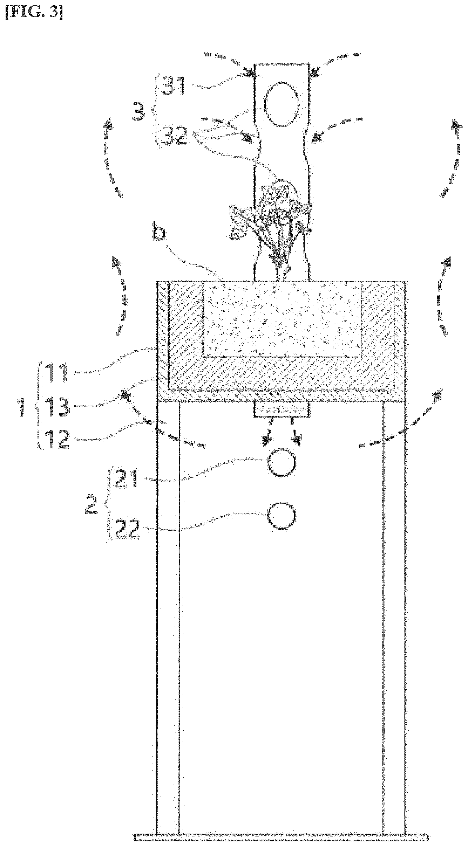

FIG. 2 is a perspective diagram for explaining a cultivation system capable of controlling a local cultivation environment according to a first embodiment of the present disclosure, and schematically illustrates by cutting a portion thereof. FIG. 3 is a schematic diagram for explaining the operation of the cultivation system capable of controlling the local cultivation environment according to the first embodiment of the present disclosure.

Referring to FIGS. 2 and 3, the cultivation system capable of controlling the local cultivation environment according to the first embodiment of the present disclosure is configured to include a bed 1, a heat exchange medium part 2, and an air circulation pipe 3, and may effectively perform the temperature control of a small area of the upper portion of the bed where the crop is planted and grown.

The bed 1 is composed of a bed frame 11, on which the soil or medium on which the crop is planted, is placed or inserted, and a bed support member 12 configured to support the bed frame 11.

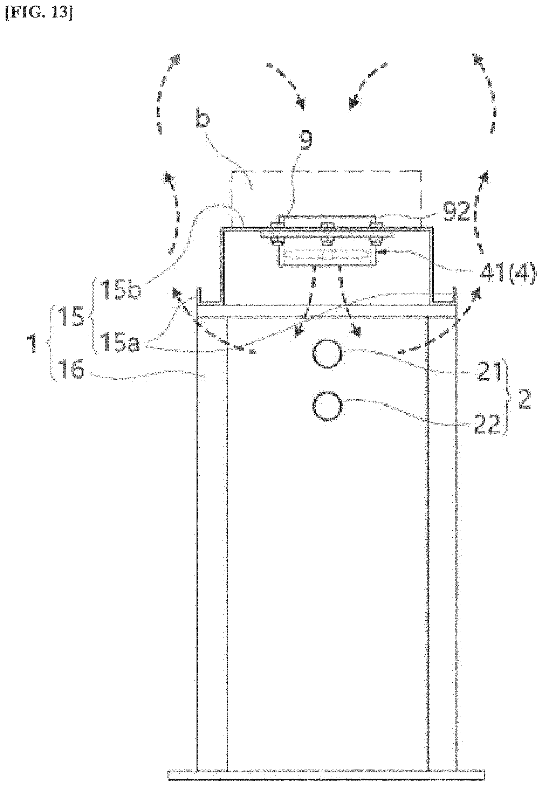

Further, the bed frame 11 may be configured variously without limitation according to a type of the crop, a cultivation method, and the like. For example, the bed frame 11 may also be configured in the form of having a gutter part configured to discharge nutrient solution, and the like formed on both sides thereof and having a seating part on which a medium is placed on the center thereof formed, as described later (see FIG. 13), but the present embodiment illustrates an example of constituting an internal material 13 such as a heat insulator on the bed frame 11 formed of approximately '⊏'-shape so that the medium (b; or soil) may be embedded therein.

The heat exchange medium part 2 is a component for dissipating heat disposed close to the bed 1 to the periphery of the bed 1 or dissipating cold air to the periphery of the bed 1, and may also be composed of an electric heater such as a warm air blower, a heating wire, or a heating mat, but the present embodiment explains based on an example configured as water pipes 21, 22 disposed under the bed 1 and in which hot water (or cold water) flows as a heating facility that is most used in the greenhouse.

The water pipes 21, 22 are a pipe that is installed to perform the heating operation by the heat dissipated by flowing hot water, and a reference numeral 21 is a hot water inflow-side water pipe through which hot water of high temperature flows, and a reference numeral 22 is connected to the hot water inflow-side water pipe 21 as a hot water recovery-side water pipe through which the hot water of the low temperature recovered after the heat of the hot water is exchanged and used for heating flows. Further, the water pipes 21, 22 are fixed to the bed support member 12, and the like by a separate fastening means, but specific illustrations thereof will be omitted.

The air circulation pipe 3 is a component installed at regular intervals along the longitudinal direction of the bed to perform the function of the passage for moving the air in the root zone of the upper portion of the bed 1 to the root zone of the lower portion of the bed, and the lower side thereof is installed upright with respect to the bed 1 to face the water pipes 21, 22.

Further, the air circulation pipe 3 is not particularly limited in form as long as it may easily suck the air positioned in the root zone of the upper portion of the bed 1 to move downwards, but as illustrated in FIG. 2, has a structure in which a plurality of flow holes 32 are formed on the outer circumferential surface of a circulation pipe body 31 having a hollow part. At this time, the circulation pipe body 31 is formed of a pipe with a larger outer diameter than the water pipes 21, 22, and the flow hole 32 is perforated in the outer circumferential surface thereof and a blocking plate is installed on the upper end portion thereof.

Further, the air circulation pipe 3 is preferably composed of a pipe made of a transparent material such as polycarbonate or acrylic so as not to interfere with the inflow of sunlight.

Hereinafter, an operation of the cultivation system capable of controlling the local cultivation environment according to the first embodiment of the present disclosure will be briefly described.

Referring to FIG. 3, if hot water of the high temperature flows into the hot water inflow-side water pipe 21 disposed under the bed frame 11 where the crop has been planted, the heat of the hot water is discharged to the surface of the pipe.

The heat discharged to the hot water inflow-side water pipe 21 warms the surrounding air of the bed frame 11 by a heat exchange operation, and the warmed air is raised by the convection phenomenon. As described above, if the warmed air is raised due to the convection phenomenon, a circulation process, in which some of the warmed air flows into the flow hole 32 of the air circulation pipe 3 by the principle of mass balance and then moves to an emptied lower space by the rise in the warmed air, is performed.

Further, since the warmed air passes through the root zone of the upper portion of the bed where the crop is grown during the time of flowing into and moving to the flow hole 32 of the air circulation pipe 3, it performs the temperature rise operation of the root zone that rises the temperature of the corresponding space.

Since the above-described process of increasing the temperature of the root zone is repeatedly performed during the time at which the hot water of the high temperature flows into the hot water inflow-side water pipe 21, it could be experimentally confirmed that the temperature rise time of the root zone of the upper portion of the bed has been shortened and the holding effect of the temperature has been raised when compared with a case without the conventional air circulation pipe 3.

Hereinafter, another embodiment according to the present disclosure will be described, but a detailed description of components similar to those illustrated in the above-described first embodiment will be omitted and components having differences will be mainly described. Further, in the following other embodiments, any structure that may be adopted among the components illustrated in the first embodiment or the components illustrated in different embodiments may also be selectively applied, and detailed descriptions thereof and illustrations on drawings are omitted.

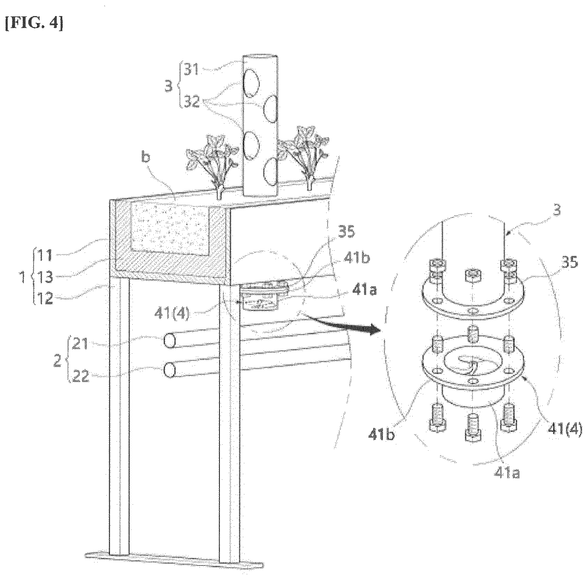

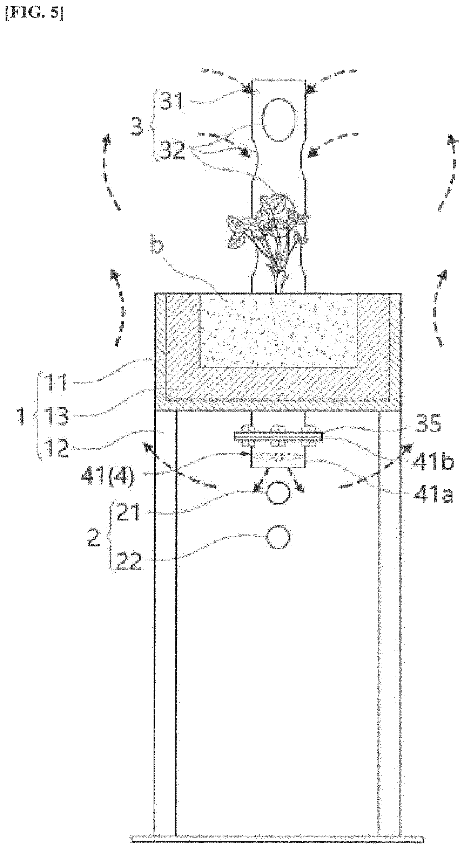

FIG. 4 is a perspective diagram for explaining a cultivation system capable of controlling a local cultivation environment according to a second embodiment of the present disclosure, and schematically illustrates by cutting a portion thereof. FIG. 5 is a schematic diagram for explaining an operation of the cultivation system capable of controlling the local cultivation environment according to the second embodiment of the present disclosure.

Referring to FIGS. 4 and 5, a cultivation system capable of controlling a local cultivation environment according to a second embodiment of the present disclosure includes the bed 1 where the crop is planted, the heat exchange medium part 2 disposed close to the bed 1, and the plurality of air circulation pipes 3 installed along the longitudinal direction of the bed to face the heat exchange medium part 2, and is further provided with the air suction means 4 connected to the air circulation pipe 3 to inflow and discharge the air.

The air suction means 4 is composed of a suction fan 41 configured to suck the air. Here, the suction fan 41 is composed of a general blow fan configured to be easily connected to the lower portion of the air circulation pipe 3 formed in a pipe form.

For example, the suction fan 41 has a structure in which an upper flange 41b connected to the air circulation pipe 3 has been formed on the upper portion of a fan body 41a in which a motor (not illustrated) including a blade has been embedded. Further, the air circulation pipe 3 has a connection flange 35 formed at the lower end thereof so that the upper flange 41b of the suction fan 41 is fastened.

The above-described cultivation system capable of controlling the local cultivation environment according to the second embodiment of the present disclosure does not rely on natural phenomena such as the convection phenomenon and the mass balance principle, but is configured to connect the suction fan 41 to the lower portion of the air circulation pipe 3 to forcibly apply a suction force thereto, thereby circulating the warm air to the lower space of the bed 1 more effectively.

As described above, if the warm air flows in the forced suction method using the suction fan 32, it is possible to increase the time at which the warm air to diffuse in the ceiling direction of the greenhouse stays in the root zone of the upper portion of the bed compared with the first embodiment, and of course, it is possible to circulate more warm air to the root zone of the lower portion of the bed, thereby shortening the temperature rise time of the root zone of the upper portion of the bed and also increasing the holding effects of the temperature when compared with the above-described first embodiment.

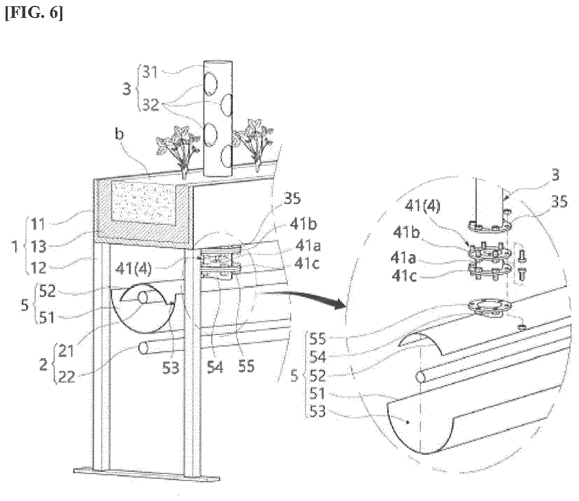

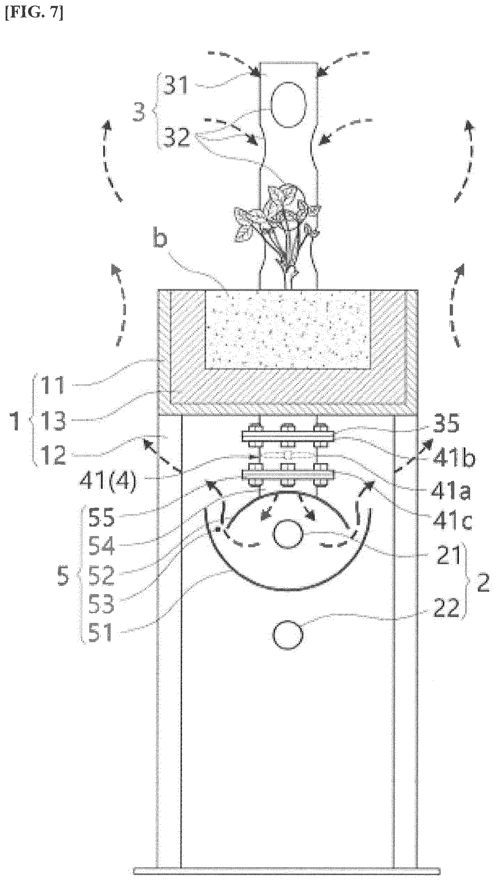

FIG. 6 is a perspective diagram for explaining a cultivation system capable of controlling a local cultivation environment according to a third embodiment of the present disclosure, and schematically illustrates by cutting a portion thereof. FIG. 7 is a schematic diagram for explaining an operation of the cultivation system capable of controlling the local cultivation environment according to the third embodiment of the present disclosure.

Referring to FIGS. 6 and 7, a cultivation system capable of controlling a local cultivation environment according to a third embodiment of the present disclosure includes the bed 1, the heat exchange medium part 2, and the air circulation pipe 3, and the air suction means 4 connected to the air circulation pipe 3 to inflow and discharge air, and the air induction member 5 configured to collect the air moved under the bed 1 by the air suction means 4 without spreading and then to induce it to flow in a determined direction is further provided.

The air induction member 5 is provided with an outflow hole 53 in the induction body formed to surround the hot water inflow-side water pipe 21 composed of the heat exchange medium part 2, and as illustrated in FIG. 5, is composed of a lower gutter 51 disposed in the longitudinal direction of the bed 1 and having a longitudinal cross-sectional shape formed in an approximately arc shape, and an upper gutter 52 disposed at a portion of the air circulation pipe 3 facing the upper portion of the lower gutter 51.

Here, the lower gutter 51 has the radius of curvature formed larger than the upper gutter 52 and is formed so that the outflow hole 53 for the outflow of air is prepared in a state disposed to face each other with the upper gutter 52.

Further, the upper gutter 52 has a connection duct 54 configured to connect the air suction means 4 formed on the upper portion of the gutter body having an arc shape, and the connection duct 54 is formed with a connection flange 55 connected to a lower flange 41c of the suction fan.

Meanwhile, the air suction means 4 is composed of the suction fan 41 as in the second embodiment, and has a structure of providing the fan body 41a in which a motor (not illustrated) including a blade has been embedded, the upper flange 41b formed to be connected to the air circulation pipe 3 at the upper portion of the fan body 41a, and the lower flange 41c formed to be connected to the connection duct 54 of the upper gutter 52 at the lower portion of the fan body 41a.

The above-described cultivation system capable of controlling the local cultivation environment according to the third embodiment of the present disclosure is further provided with the air induction member 5, and accordingly, the warm air introduced when forcibly sucking to the root zone of the lower portion of the bed 1 by the suction fan 41 may be collected in the space between the upper gutter 52 and the lower gutter 51 without irregularly spreading to the bottom and then induced to the root zone of the upper portion of the bed 1 where the crop is grown through the outflow hole 53, thereby reducing the waste of thermal energy, and the warm air may be provided accurately to the growing portion of the crop, thereby effectively performing the temperature control process of the root zone.

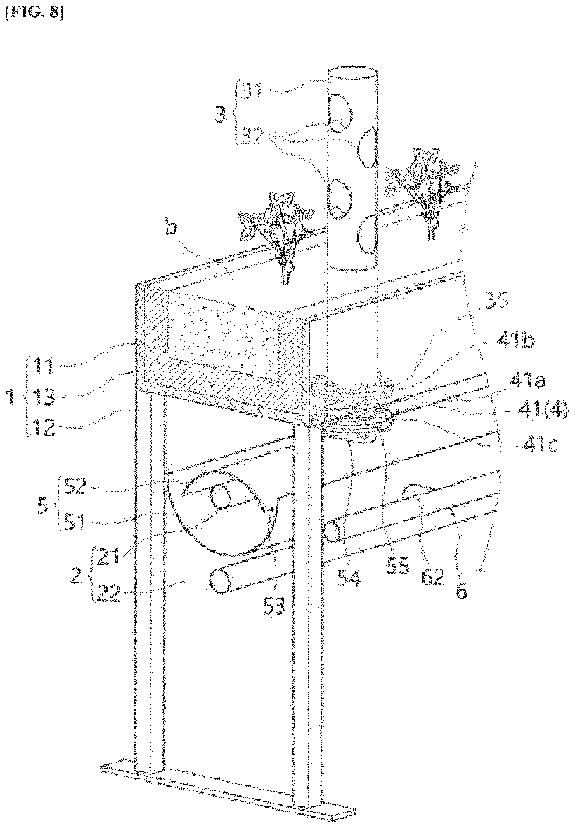

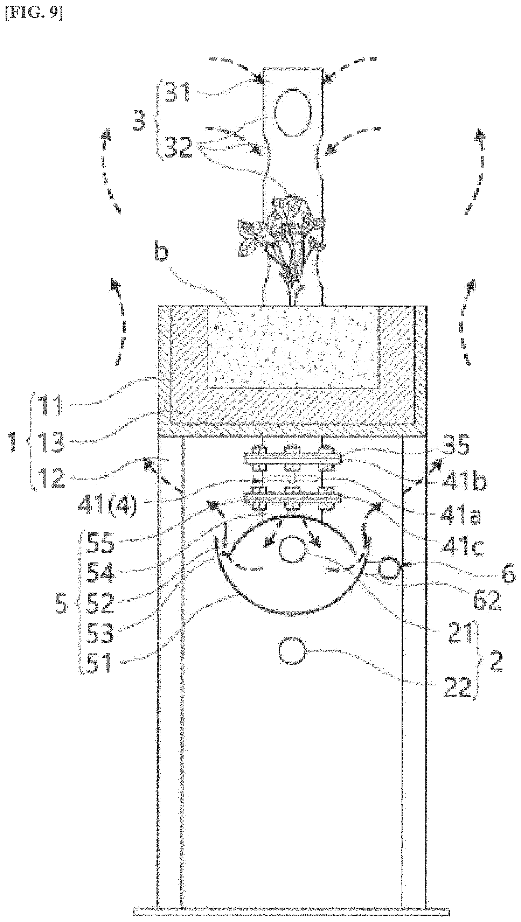

FIG. 8 is a perspective diagram for explaining a cultivation system capable of controlling a local cultivation environment according to a fourth embodiment of the present disclosure, and schematically illustrates by cutting a portion thereof. FIG. 9 is a schematic diagram for explaining the operation of the cultivation system capable of controlling the local cultivation environment according to the fourth embodiment of the present disclosure.

Referring to FIGS. 8 and 9, the cultivation system capable of controlling the local cultivation environment according to the fourth embodiment of the present disclosure includes the bed 1 where the crop is planted, the heat exchange medium part 2 disposed close to the bed 1, the plurality of air circulation pipes 3 installed along the longitudinal direction of the bed to face the heat exchange medium part 2, the air suction means 4 connected to the air circulation pipe 3 to inflow and discharge air, and the air induction member 5 disposed to be communicated with the air circulation pipe 3 and disposed to surround the heat exchange medium part 2, and a utility supply pipe 6 is further provided to selectively supply the air containing dry air, moisture, and CO₂ in addition to cold air or warm air to the growth area of the crop.

The utility supply pipe 6 is connected to be communicated to the air induction member 5 via the connection pipe 62 in order to provide dry air, cold air, warm air, moisture, and CO₂ supplied from a supply source to the growth area of the crop. Here, the utility supply pipe 6 may also be configured in such a manner of disposing an independent pipe for each type of gas so as to supply dry air, cold air, warm air, moisture, CO₂, and the like, respectively, independently, but as illustrated in FIG. 8, it is preferable to install one utility supply pipe 6 to use it interchangeably.

The above-described cultivation system capable of controlling the local cultivation environment according to the fourth embodiment of the present disclosure may discharge the dry air to the root zone, which is a crop growth area, of the upper portion of the bed 1 through the air induction member 5 when supplying the dry air to the utility supply pipe 6 in order to quickly solve the humidity control or the phenomenon of dew condensation on the leaf of the crop in the cultivation process of the crop, thereby quickly controlling the humidity of the root zone where the crop is planted.

Further, if carbon dioxide is supplied to the utility supply pipe 6 even a case where the fertilizer of carbon dioxide necessary for the growth of the crop is required, it may be quickly fertilized in the root zone of the upper portion of the bed 1 through the air induction member 5.

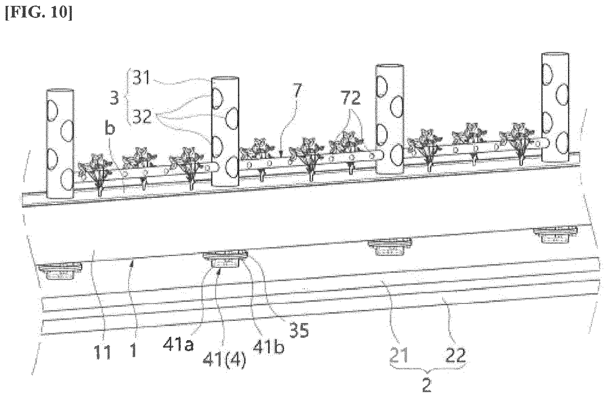

FIG. 10 is a perspective diagram for explaining a first modification example of the cultivation system capable of controlling the local cultivation environment according to the fourth embodiment of the present disclosure.

Referring to FIG. 10, the cultivation system capable of controlling the local cultivation environment according to the first modification example of the fourth embodiment of the present disclosure is provided with the plurality of air circulation pipes 3 installed along the longitudinal direction of the bed 1 to face the heat exchange medium part 2, and a horizontal air circulation pipe 7 connected horizontally between the air circulation pipes 3 and formed with a plurality of flow holes 72 is further provided.

The above-described cultivation system capable of controlling the local cultivation environment according to the first modification example of the fourth embodiment may suck the air in the root zone disposed in a spacing space part between the air circulation pipes 3 more effectively because the horizontal air circulation pipe 7 is connected between the air circulation pipes 3 to be communicated with each other. Accordingly, it is possible to further reduce the amount of warm air spreading in the ceiling direction of the greenhouse, thereby more efficiently performing the temperature control of the root zone.

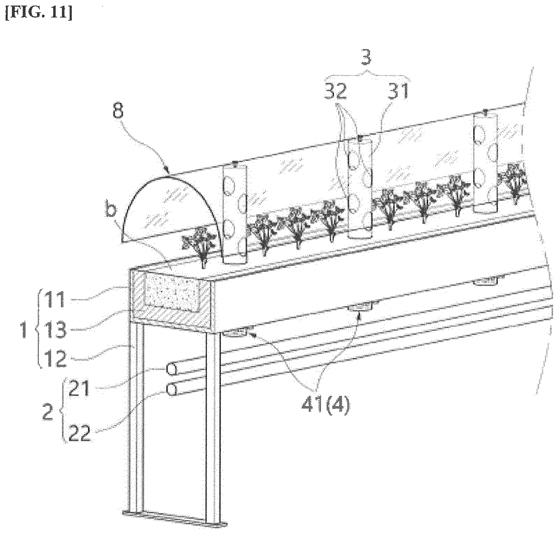

FIG. 11 is a perspective diagram for explaining a second modification example of the cultivation system capable of controlling the local cultivation environment according to the fourth embodiment of the present disclosure, and schematically illustrates by cutting a portion thereof.

Referring to FIG. 11, the cultivation system capable of controlling the local cultivation environment according to the second modification example of the fourth embodiment of the present disclosure includes the bed 1, the heat exchange medium part 2, the air circulation pipe 3, the air suction means 4, and the air induction member 5, and a transparent cover body 8 is further provided on the plurality of air circulation pipes 3 installed along the longitudinal direction of the bed 1 so as to further reduce the spread of air due to the convection phenomenon.

The transparent cover body 8 is installed in a form to be mounted between the air circulation pipes 3 so as to cover the upper portion of the bed 1, and is formed so that an accommodating space of the crop is prepared therein.

Further, the transparent cover body 8 has a planar member, which has been formed so that the longitudinal cross-sectional shape has a substantially arc shape, disposed along the longitudinal direction of the bed 1, and is made of a transparent material such as polycarbonate, glass, or vinyl so as to allow the inflow of sunlight.

The above-described cultivation system capable of controlling the local cultivation environment according to the second modification example of the fourth embodiment may reduce the spread together with a function of holding the air such as the warm air received from the lower portion thereof to some extent because the upper space of the growth area of the crop is partitioned and sealed by the transparent cover body 8, thereby improving suction efficiency of the warm air by the air suction means 4, and as a result, it is possible to improve the temperature holding effect of the small area through the increase in the recirculation rate and staying time of the warm air and to more effectively perform the temperature control of the root zone.

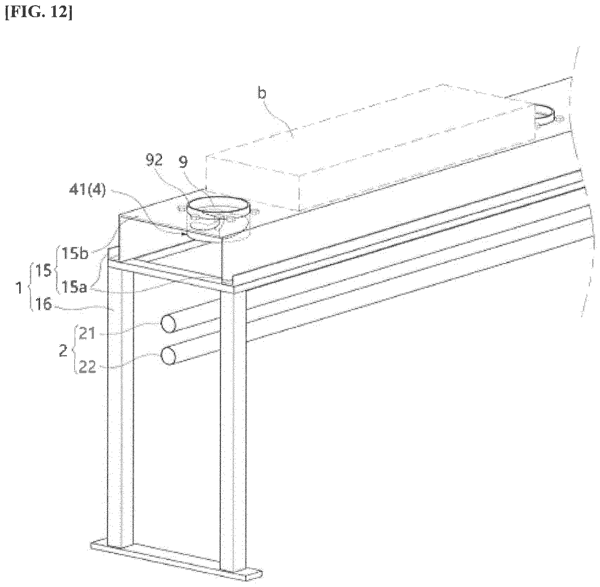

FIG. 12 is a perspective diagram for explaining a cultivation system capable of controlling a local cultivation environment according to a fifth embodiment of the present disclosure, and schematically illustrates by cutting a portion thereof. FIG. 13 is a schematic diagram for explaining an operation of the cultivation system capable of controlling the local cultivation environment according to the fifth embodiment of the present disclosure.

Referring to FIGS. 12 and 13, the cultivation system capable of controlling the local cultivation environment according to the fifth embodiment of the present disclosure is composed of the bed 1 where the crop is planted, the heat exchange medium part 2 disposed close to the bed 1, a plurality of air circulation holes 9 formed along the longitudinal direction of the bed to face the heat exchange medium part 2, and the air suction means 4 connected to the air circulation hole 9 to inflow and discharge air.

The bed 1 is composed of a bed frame 15, on which the soil or medium, on which the crop is planted, is placed or inserted, and a bed support member 16 configured to support the bed frame 15.

Here, the bed frame 15 has a plate-shaped member formed to be curved, and is configured to have a gutter portion 15a configured to discharge nutrient solution, and the like formed at both sides thereof and have a seating part 15b where a medium is placed on the center thereof formed in a protruded shape.

The air circulation hole 9 is configured in a method of perforating a hole for the flow of air in the place where the air circulation pipe is installed without installing the pipe such as the air circulation pipe 3 illustrated in the above-described second embodiment.

Further, it is preferable that the air circulation hole 9 has a foreign material inflow prevention projection 92 formed to be protruded at the edge portion thereof so that the nutrient solution, and the like flowed out from the medium does not flow therein.

The air suction means 4 is composed of the suction fan 41 as in the second embodiment and is coupled to be positioned on the corresponding bottom so as to suck the air of the upper portion thereof from the air circulation hole 9.

The cultivation system capable of controlling the local cultivation environment according to the fifth embodiment of the present disclosure described above may move the warm air, which is positioned in the root zone of the upper portion of the bed, spreading in the ceiling direction of the greenhouse to the root zone of the lower portion of the bed because the suction fan 41 is connected to the bed 1 corresponding to the lower portion of the air circulation hole 9 to forcibly apply the suction force thereto. At this time, since the suction fan 41 is disposed close to the bed in which the air circulation hole 9 has been formed, a relatively large suction force may act on the adjacent area to quickly suck and circulate it, thereby effectively performing the temperature control of the root zone in a case of being applied to the greenhouse that plants a short crop, a sprout, or the like.

## Claims

1. A cultivation system capable of controlling a local cultivation environment, comprising:
a bed (1) where a crop is planted;
a heat exchange medium part (2) disposed under and close to the bed (1):
a plurality of air circulation pipes (3) installed at regular intervals along the longitudinal direction of the bed (1) to move air in a root zone of an upper portion of the bed (1) to a root zone of a lower portion of the bed, and the lower side thereof is installed upright with respect to the bed 1 to face the heat exchange medium part (2); and
an air suction means (4) connected to suck air into the air circulation pipes (3).

2. A cultivation system capable of controlling a local cultivation environment of claim 1, further comprising:
an air induction member (5) disposed to be communicated with the air circulation pipe (3), and having an outflow hole (53) provided in an induction body formed to surround the heat exchange medium part (3).

3. A cultivation system capable of controlling a local cultivation environment of claim 2, further comprising:
a utility supply pipe (6) connected to be communicated with the air induction member (5), and configured to supply at least one of the air comprising dry air, cold air, warm air, moisture, and CO₂ for creating the cultivation environment of the crop.

4. The cultivation system capable of controlling the local cultivation environment of any one of claims 1, 2 and 3,
wherein the air circulation pipe (3) has a plurality of flowing holes formed in a circulation pipe body (31) having a hollow part.

5. The cultivation system capable of controlling the local cultivation environment of any one of claims 1, 2 and 3, further comprising a horizontal air circulation pipe (7) connected horizontally between the air circulation pipes (3) and having a plurality of flowing holes formed therein,
wherein the air circulation pipe (3) has a plurality of flowing holes formed in the circulation pipe body (31) having the hollow part.

6. The cultivation system capable of controlling the local cultivation environment of any one of claims 1, 2 and 3, comprising a transparent cover body (8) installed between the air circulation pipes (3) so as to cover the upper portion of the bed (3) and formed so that an accommodating space of the crop is prepared therein.

7. The cultivation system capable of controlling the local cultivation environment of any one of claims 1, 2 and 3,
wherein the heat exchange medium part (2) is composed of a water pipe through the bed (1) and in which warm water or cold water flows.

8. The cultivation system capable of controlling the local cultivation environment of any one of claims 1, 2 and 3,
wherein the air suction means (4) is composed of a suction fan (41) configured to suck air.

9. The cultivation system capable of controlling the local cultivation environment of any one of claims 1, 2 and 3,
wherein the bed (1) comprises
a bed frame (15) on which soil or medium is place; and
a bed support member (16) connected to support the bed frame (15).

## Patentansprüche

1. Ein Kultivierungssystem, das dazu in der Lage ist, eine lokale Kultivierungsumgebung zu steuern, wobei dasselbe folgende Merkmale aufweist:
ein Beet (1), in dem eine Pflanze gepflanzt wird;
ein Wärmeübertragungsmittelteil (2), das unter und in der Nähe von dem Beet (1) angeordnet ist;
eine Mehrzahl von Luftzirkulationsrohren (3), die in regelmäßigen Abständen entlang der Längsrichtung des Beets (1) montiert sind, um Luft in einer Wurzelzone eines oberen Abschnitts des Beetes (1) zu einer Wurzelzone eines unteren Abschnitts des Beetes zu bewegen, und deren Unterseite in Bezug auf das Beet (1) aufrecht montiert ist, um dem Wärmeübertragungsmittelteil (2) zugewandt zu sein; und
eine Luftsaugeinrichtung (4), die dazu verbunden ist, Luft in die Luftzirkulationsrohre (3) zu saugen.

2. Ein Kultivierungssystem, das dazu in der Lage ist, eine lokale Kultivierungsumgebung zu steuern, gemäß Anspruch 1, das ferner folgende Merkmale aufweist:
ein Lufteinlassbauglied (5), das dazu angeordnet ist, mit dem Luftzirkulationsrohr (3) in Kommunikation zu stehen, und ein Auslassloch (53) aufweist, das in einem Einlasskörper bereitgestellt ist, der dazu gebildet ist, das Wärmeübertragungsmittelteil (3) zu umgeben.

3. Ein Kultivierungssystem, das dazu in der Lage ist, eine lokale Kultivierungsumgebung zu steuern, gemäß Anspruch 2, das ferner folgende Merkmale aufweist:
ein Hilfsmittelzufuhrrohr (6), das dazu verbunden ist, mit dem Lufteinlassbauglied (5) in Kommunikation zu stehen, und dazu konfiguriert ist, Luft zuzuführen, um die Kultivierungsumgebung der Pflanze zu erschaffen, wobei die Luft trockene Luft, kalte Luft, warme Luft, Feuchtigkeit und/oder CO₂ aufweist.

4. Das Kultivierungssystem, das dazu in der Lage ist, die lokale Kultivierungsumgebung zu steuern, gemäß einem der Ansprüche 1, 2 und 3,
wobei das Luftzirkulationsrohr (3) eine Mehrzahl von Strömungslöchern aufweist, die in einem Zirkulationsrohrkörper (31) mit einem hohlen Teil gebildet sind.

5. Das Kultivierungssystem, das dazu in der Lage ist, die lokale Kultivierungsumgebung zu steuern, gemäß einem der Ansprüche 1, 2 und 3, das ferner ein horizontales Luftzirkulationsrohr (7) aufweist, das horizontal zwischen den Luftzirkulationsrohren (3) angeordnet ist und eine Mehrzahl von Strömungslöchern darin gebildet aufweist,
wobei das Luftzirkulationsrohr (3) eine Mehrzahl von Strömungslöchern aufweist, die in dem Zirkulationsrohrkörper (31) mit dem hohlen Teil gebildet sind.

6. Das Kultivierungssystem, das dazu in der Lage ist, die lokale Kultivierungsumgebung zu steuern, gemäß einem der Ansprüche 1, 2 und 3, das einen transparenten Abdeckungskörper (8) aufweist, der zwischen den Luftzirkulationsrohren (3) montiert ist, um den oberen Abschnitt des Beetes (3) abzudecken, und derart gebildet ist, dass ein Aufnahmeraum der Pflanze darin erschaffen ist.

7. Das Kultivierungssystem, das dazu in der Lage ist, die lokale Kultivierungsumgebung zu steuern, gemäß einem der Ansprüche 1, 2 und 3,
wobei das Wärmeübertragungsmittelteil (2) aus einem Wasserrohr besteht, welches durch das Beet (1) verläuft und in dem warmes Wasser oder kaltes Wasser fließt.

8. Das Kultivierungssystem, das dazu in der Lage ist, die lokale Kultivierungsumgebung zu steuern, gemäß einem der Ansprüche 1, 2 und 3,
wobei die Luftsaugeinrichtung (4) aus einem Sauglüfter (41) besteht, der dazu konfiguriert ist, Luft zu saugen.

9. Das Kultivierungssystem, das dazu in der Lage ist, die lokale Kultivierungsumgebung zu steuern, gemäß einem der Ansprüche 1, 2 und 3, wobei das Beet (1) Folgendes aufweist:
einen Beetrahmen (15), auf dem Erde oder ein Medium platziert wird; und
ein Beetstützbauglied (16), um den Beetrahmen (15) zu stützen.

## Revendications

1. Système de culture à même de réguler un environnement de culture local, comprenant:
un lit (1) dans lequel est plantée une plante;
une partie de milieu d'échange de chaleur (2) disposée au-dessous et à proximité du lit (1):
une pluralité de tuyaux de circulation d'air (3) installés à intervalles réguliers dans la direction longitudinale du lit (1), destinés à déplacer l'air dans une zone de racines d'une partie supérieure du lit (1) vers une zone de racines d'une partie inférieure du lit, et son côté inférieur est installé verticalement par rapport au lit 1 de manière à faire face à la partie de milieu d'échange de chaleur (2); et
un moyen de succion d'air (4) connecté de manière à aspirer de l'air dans les tuyaux de circulation d'air (3).

2. Système de culture à même de réguler un environnement de culture local selon la revendication 1, comprenant par ailleurs:
un élément d'induction d'air (5) disposé de manière à communiquer avec le tuyau de circulation d'air (3), et présentant un trou de sortie (53) prévu dans un corps d'induction formé de manière à entourer la partie de milieu d'échange de chaleur (3).

3. Système de culture à même de réguler un environnement de culture local selon la revendication 2, comprenant par ailleurs:
un tuyau d'alimentation utilitaire (6) connecté de manière à communiquer avec l'élément d'induction d'air (5), et configuré pour alimenter au moins l'un parmi de l'air comprenant de l'air sec, de l'air froid, de l'air chaud, de l'humidité et du CO₂ pour créer l'environnement de culture de la plante.

4. Système de culture à même de réguler l'environnement de culture local selon l'une quelconque des revendications 1, 2 et 3,
dans lequel le tuyau de circulation d'air (3) présente une pluralité de trous de circulation formés dans un corps de tuyau de circulation (31) présentant une partie creuse.

5. Système de culture à même de réguler l'environnement de culture local selon l'une quelconque des revendications 1, 2 et 3, comprenant par ailleurs un tuyau de circulation d'air horizontal (7) connecté horizontalement entre les tuyaux de circulation d'air (3) et présentant une pluralité de trous de circulation y formés,
dans lequel le tuyau de circulation d'air (3) présente une pluralité de trous de circulation formés dans le corps de tuyau de circulation (31) présentant la partie creuse.

6. Système de culture à même de réguler l'environnement de culture local selon l'une quelconque des revendications 1, 2 et 3, comprenant un corps de couvercle transparent (8) installé entre les tuyaux de circulation d'air (3) de manière à recouvrir la partie supérieure du lit (3) et formé de sorte que soit préparé un espace de réception de la plante dans ce dernier.

7. Système de culture à même de réguler l'environnement de culture local selon l'une quelconque des revendications 1, 2 et 3,
dans lequel la partie de milieu d'échange de chaleur (2) est composée d'une conduite d'eau à travers le lit (1) et dans laquelle circule de l'eau chaude ou de l'eau froide.

8. Système de culture à même de réguler l'environnement de culture local selon l'une quelconque des revendications 1, 2 et 3,
dans lequel le moyen d'aspiration d'air (4) est composé d'un ventilateur d'aspiration (41) configuré pour aspirer de l'air.

9. Système de culture à même de réguler l'environnement de culture local selon l'une quelconque des revendications 1, 2 et 3,
dans lequel le lit (1) comprend
un cadre de lit (15) sur lequel est placé de la terre ou du milieu; et un élément de support de lit (16) connecté de manière à supporter le cadre de lit (15).
